# EUROPÄISCHE PATENTSCHRIFT

(11) **EP 1 772 633 B1**
(45) Veröffentlichungstag und Bekanntmachung des Hinweises auf die Patenterteilung: **12.11.2008**
(21) Anmeldenummer: 06019061.8
(22) Anmeldetag: 12.09.2006
(51) Int. Cl.: F16B 5/02

(54) **Vorrichtung zum Verschrauben zweier Bauteile mit Toleranzausgleich**
Device for connecting two parts with tolerance compensation
Liaison par vissage de deux éléments avec compensation de tolérance

(30) Priorität: 10.10.2005 DE 202005015860 U
(43) Veröffentlichungstag der Anmeldung: 11.04.2007
(73) Patentinhaber: Böllhoff Verbindungstechnik GmbH, 33649 Bielefeld (DE)
(72) Erfinder: Leitermann, Wulf, 74206 Bad Wimpfen (DE); Grubert, Klaus Friedrich, 31675 Bückeburg (DE)
(74) Vertreter: Hauck Patent- und Rechtsanwälte

(56) Entgegenhaltungen:
- EP-B1- 0 957 272
- FR-A- 2 863 019
- US-A1- 2002 154 966

## Beschreibung

Die vorliegende Erfindung betrifft eine Vorrichtung zum Verschrauben eines ersten Bauteils und eines zweiten Bauteils unter Freilassung eines Fügespaltes mit selbsttätigem Ausgleich von Toleranzen des Fügespaltes.

Derartige Vorrichtungen mit selbsttätigem Toleranzausgleich sind in großer Vielfalt bekannt, siehe beispielsweise EP 0 176 663 B1, DE 42 24 575 C2, DE 101 51 383 A1, DE 201 19 112 U und DE 203 14 003 U. Sie ermöglichen eine Schraubverbindung zwischen den beiden Bauteilen und sorgen gleichzeitig für einen selbsttätigen Ausgleich fertigungs- und/oder montagebedingter Toleranzen des Fügespaltes zwischen den üblicherweise vormontierten beiden Bauteilen. Wenngleich sich zahlreiche dieser Vorrichtungen in der Praxis bewährt haben, besteht zumindest hinsichtlich einer der folgenden Eigenschaften Verbesserungsbedarf: Herstellungskosten, Anzahl der Einzelteile, Einfachheit des Aufbaus, Platzbedarf, Funktionssicherheit.

EP 0 957 272 B1 offenbart eine Vorrichtung zum Verschrauben eines ersten Bauteils und eines zweiten Bauteils unter Freilassung eines Fügespaltes. Die beiden Bauteile werden mit Hilfe einer Schraube und einer Ausgleichswendel zum Ausgleichen von Toleranzen des Fügespaltes miteinander verbunden. Die Ausgleichswendel ist auf der Schraube durch einen Durchzugsabschnitt des ersten Bauteils hindurch drehbar, bis sie den Fügespalt zwischen den beiden Bauteilen zwecks Toleranzausgleich ausfüllt. Basierend auf dieser Konstruktion ist die Schraube zum Verschrauben der beiden Bauteile in eine Gewindebohrung des zweiten Bauteils einschraubbar.

Der vorliegenden Erfindung liegt die Aufgabe zugrunde, eine Vorrichtung zum Verschrauben zweier Bauteile unter Freilassung eines Fügespaltes mit selbsttätigem Ausgleich von Toleranzen des Fügespaltes zu schaffen, die eine geringe Anzahl der Einzelteile, einen einfachen konstruktiven Aufbau, einen geringen Platzbedarf sowie eine hohe Funktionssicherheit hat.

Diese Aufgabe wird durch die in Anspruch 1 definierte Vorrichtung gelöst.

Die erfindungsgemäße ausgebildete Vorrichtung besteht aus einer Schraube und einer Ausgleichswendel sowie einem wendelförmigen Durchzugsabschnitt eines der Bauteile. Erfindungsgemäß ist die Ausgleichswendel auf der Schraube durch Reibschluss und/oder lösbaren Formschluss festlegbar und in ihren Abmessungen auf den wendelförmigen Durchzugsabschnitt abgestimmt, so dass sie durch Antreiben der Schraube durch den Durchzugsabschnitt hindurch drehbar ist, bis sie den Fügespalt zwecks Toleranzausgleich ausfüllt. Der Reibschluss und/oder Formschluss zwischen Schraube und Ausgleichwendel wird dann durch weiteres Antreiben der Schraube überwunden, damit die Schraube zum Verschrauben der beiden Bauteile in eine Gewindebohrung des zweiten Bauteils eingeschraubt werden kann.

Die erfindungsgemäß ausgebildete Vorrichtung besteht somit, abgesehen von den in spezieller Weise ausgebildeten zu verschraubenden Bauteilen, lediglich aus Schraube und Ausgleichswendel. Sie zeichnet sich daher durch eine geringe Anzahl von Einzelteilen sowie durch einen einfachen konstruktiven Aufbau aus, was sich in entsprechend niedrigen Herstellungs- und Montagekosten niederschlägt. Auch der Platzbedarf ist relativ gering, da die Ausgleichswendel einen kleineren Außendurchmesser als der Kopf der Schraube haben kann. Insgesamt ergibt sich eine hohe Funktionssicherheit sowie eine lange Lebensdauer der erfindungsgemäß ausgebildeten Vorrichtung.

Die Ausgleichswendel für die erfindungsgemäß ausgebildete Vorrichtung hat zweckmäßigerweise einen auf Block gewickelten Steigungsbereich zum Ausfüllen des Fügespaltes sowie einen auf Abstand gewickelten Steigungsbereich, der beim Einschrauben der Schraube in die Gewindebohrung des zweiten Bauteiles komprimiert wird.

Die Schraube für die erfindungsgemäß ausgebildete Vorrichtung hat zweckmäßigerweise einen Gewindeabschnitt und einen gewindefreien Mitnahmeabschnitt, dessen Durchmesser größer als der Außendurchmesser des Gewindeabschnittes und größer als der Innendurchmesser der Ausgleichswendel ist, um den erforderlichen Reibschluss zwischen Schraube und Ausgleichswendel zu erzeugen.

Weitere vorteilhafte Ausgestaltungen und Weiterbildungen der Erfindung sind in den Unteransprüchen definiert.

Anhand der Zeichnung wird ein Ausführungsbeispiel der Erfmdung näher erläutert. Es zeigt:
Figur 1 einen Schnitt durch ein Bauteil A in Blickrichtung der Pfeile I - I in Figur 2;
Figur 2 eine Draufsicht auf das Bauteil A in Figur 1;
Figur 3 eine Seitenansicht einer Schraube;
Figur 4 einen Längsschnitt durch eine Ausgleichswendel mit Einzelheiten E und E';
Figur 5 eine teilweise geschnittene Seitenansicht einer erfindungsgemäß ausgebildeten Vorrichtung zum Verschrauben zweier Bauteile während der Montage;
Figur 6 eine der Figur 5 entsprechenden Ansicht der Vorrichtung im fertig montiertem Zustand.

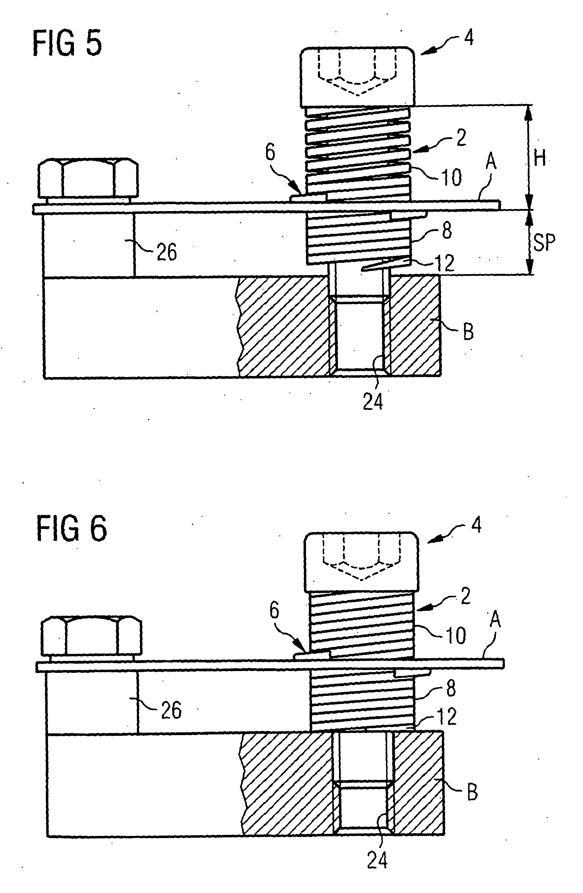

Die in der Zeichnung dargestellte Vorrichtung zum Verschrauben eines Bauteils A und eines Bauteils B unter Freilassung eines Fügespaltes SP (siehe Figuren 5 und 6) besteht im Prinzip aus einer Ausgleichswendel 2, einer Schraube 4 und einem Durchzugsabschnitt 6 des Bauteils A. Der Fügespalt SP ist aufgrund von fertigungs- und/oder montagebedingter Toleranzen veränderlich. Die zu beschreibende Vorrichtung sorgt für einen selbsttätigen Ausgleich dieser Toleranzen.

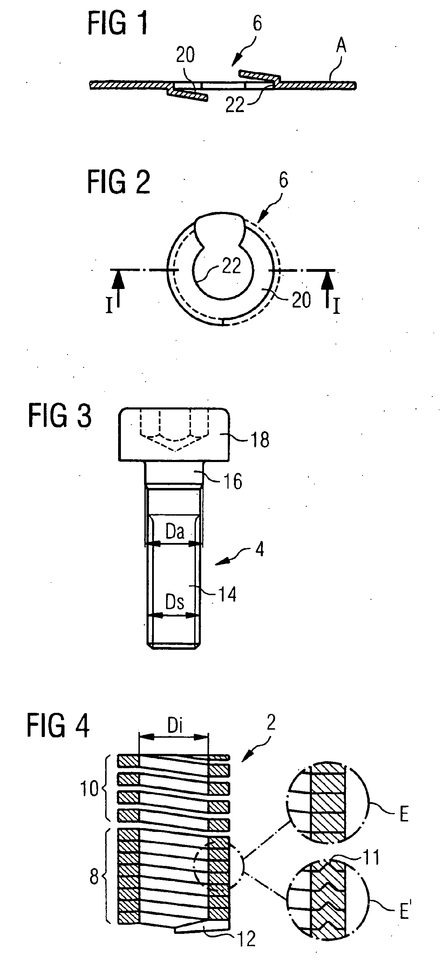

Die in Figur 4 dargestellte Ausgleichswendel ist als Schraubenfeder mit einer größeren Anzahl von Windungen ausgebildet. Die Windungen der Ausgleichswendel 2 haben im dargestellten Ausführungsbeispiel einen gleichförmigen Innendurchmesser Di und einen gleichförmigen Außendurchmesser, sodass die Ausgleichwendel 2 insgesamt die Form eines Zylinders mit einem zylindrischen Loch hat.

Wie in Figur 4 und der zugehörigen Einzelheit E zu sehen ist, haben die Windungen einen abgeflachten Querschnitt, um eine flächige gegenseitige Anlage der Windungen zu erzielen. Im konkreten Ausführungsbeispiel haben die Windungen einen rechteckigen Querschnitt (Einzelheit E), sodass sie eine Art Unterlegscheibenstapel bilden. Um ein seitliches Verrutschen der Windungen im verspannten Zustand zu vermeiden, kann der Querschnitt auch eine Kontur 11 (Einzelheit E') haben, sodass die Windungen durch Formschluss seitlich unverschiebbar gehalten sind. Im dargestellten Ausführungsbeispiel besteht die Kontur 11 aus einer zentralen, dachfirstartigen Erhöhung bzw. Vertiefung der Windungen, wie in der Einzelheit E' zu sehen ist.

Die Ausgleichswendel 2 setzt sich aus einem auf Block gewickelten Steigungsbereich 8 und einem auf Abstand gewickelten Steigungsbereich 10 zusammen, deren Zweck noch genauer erläutert wird. Wie in Figur 4 zu sehen ist, hat der auf Block gewickelte Steigungsbereich 8 ein von den übrigen Windungen etwas abgehobenes Ende 12, dessen Zweck ebenfalls noch genauer erläutert wird.

Die Schraube 4 setzt sich aus einem Gewindeabschnitt 14, einem gewindefreien Mitnahmeabschnitt 16 sowie einem Schraubenkopf 18 zusammen. Der Außendurchmesser Ds des Gewindeabschnittes 14 ist kleiner als der Innendurchmesser Di der Ausgleichswendel 2. Der Außendurchmesser Da des Mitnahmeabschnittes 16 ist größer als der Innendurchmesser Di der Ausgleichswendel, sodass die Schraube 4 mit der Ausgleichswendel 2 durch Reibschluss über den Mitnahmeabschnitt Da verbindbar ist. Der Reibschluss zwischen der Ausgleichswendel 2 und der Schraube 4 könnte jedoch auch auf andere Weise hergestellt werden, beispielsweise dadurch, dass sich die Ausgleichswendel nach oben hin verjüngt. Auch könnte der Reibschluss durch einen lösbaren Formschluss ersetzt oder mit diesem kombiniert werden. Beispielsweise könnte eine ratschenartige Schnappverbindung, ein Spalt kurz unter dem Kopf der Schraube, oder dgl. vorgesehen werden. Eine Mitnahme der Ausgleichswendel durch die Schraube wäre dann auch gewährleistet, wenn ein Reibschluss z. B. aufgrund des Vorhandenseins von Schmiermitteln und zur Übertragung des erforderlichen Drehmomentes nicht ausreicht.

Das Bauteil A ist als relativ dünnwandiges Blech ausgebildet, während das Bauteil B dickwandiger ausgebildet sein kann. Wie in den Figuren 1 und 2 zu sehen ist, besteht der Durchzugsabschnitt 6 aus einem wendelförmig verlaufenden Teil 20, das aus der Ebene des Bauteils A heraus verformt ist und wendelförmig in einer einzelnen Windung um ein kreisrundes Loch 22 herum verläuft. Im dargestellten Ausführungsbeispiel ist der Durchzugsabschnitt 6 unmittelbar in das Bauteil A eingearbeitet. Dies kann beispielsweise in der Weise erfolgen, dass zunächst das Loch 22 in das Bauteil A gestanzt wird, worauf dann das Teil 20 mittels eines Formstempels geformt wird. Eine andere Möglichkeit besteht darin, den Durchzugsabschnitt in einem getrennten Bauteil (nicht gezeigt) auszubilden, das dann mit dem Bauteil A fest verbunden wird.

Der in Figur 1 dargestellte Durchzugsabschnitt 6 ist so ausgebildet, dass das Teil 20 insgesamt auf einer Seite bezüglich der Ebene des Bauteils A liegt. Die Figuren 5 und 6 zeigen eine abgewandelte Ausführungsform, bei der der Durchzugsabschnitt 6 beidseitig aus der Ebene des Bauteils A heraus verformt ist.

Es wird nun die Montage- und Funktionsweise der beschriebenen Vorrichtung erläutert:

In den Figuren 5 und 6 ist auf der linken Seite eine herkömmliche Schraubverbindung 26 angedeutet, durch die im dargestellten Ausführungsbeispiel das Bauteil A am Bauteil B vormontiert ist.

Zwecks Zusammenbau der Vorrichtung (Figuren 5, 6) wird die Ausgleichswendel 2 auf der Schraube 2 montiert. Wegen des Übermaßes des Durchmessers Da des Mitnahmeabschnittes 16 gegenüber dem Innendurchmesser Di der Ausgleichswendel 2 ist dann die Ausgleichswendel 2 auf der Schraube 4 reibschlüssig festgelegt. Das Übermaß zwischen Da und Di ist so festzulegen, dass ein ausreichender Reibschluss (Kraftschluss) zum Antrieb der Ausgleichswendel 2 durch die Schraube 4 gegeben ist.

Die Schraube 4 mit der reibschlüssig gehaltenen Wendel 2 wird nun in den Durchzugsabschnitt 6 des Bauteils A eingeschraubt. Hierzu wird mit Hilfe des abgehobenen Endes 12 die Ausgleichswendel 2 in den Durchzugsabschnitt 6 so "eingefädelt", dass das wendelförmige Teil 20 zwischen die Windungen des Steigungsbereiches 8 der Ausgleichswendel 2 gelangt. Die Ausgleichswendel 2 lässt sich dann durch Drehen der Schraube 4 problemlos durch den Durchzugsabschnitt 6 hindurchdrehen, wobei jeweils die Ausgleichwendel 2 mit einer Windung an der Unterseite des Teils 2 und mit einer benachbarten Windung an der Oberseite des Teils 2 anliegt.

Auf diese Weise ist eine verliersichere Vormontage der Schraube 4 und der Ausgleichswendel 2 an dem Bauteil A möglich. Das Bauteil A, die Ausgleichswendel 2 und die Schraube 4 können daher als Einheit gehandhabt werden, ehe das Bauteil A mit dem Bauteil B verschraubt wird.

Um nun die Bauteile A und B miteinander zu verschrauben, wird die Schraube 4 angetrieben, die dann die Ausgleichswendel 2 über den Reibschluss und/oder Formschluss mitnimmt und durch den Durchzugsabschnitt 6 hindurchdreht, bis das Ende 12 der Ausgleichsfeder 2 das Bauteil B erreicht. Wenn das abstehende Ende 12 in Anlage mit der angrenzenden Windung der Ausgleichsfeder 2 gedrückt worden ist, füllt der auf Block gewickelte Steigungsbereich 8 der Ausgleichswendel 2 den Fügespalt SP vollständig aus. Damit ist ein selbsttätiger Ausgleich von Toleranzen des Fügespaltes SP erreicht.

Wird die Schraube 4 unter Überwindung des Reibschlusses und/oder Formschlusses zwischen Ausgleichswendel 2 und Schraube 4 weitergedreht, wird der auf Abstand gewickelte Steigungsbereich 10 der Ausgleichswendel 2 vom Kopf 18 der Schraube 4 komprimiert, bis die Windungen des auf Abstand gewickelten Steigungsbereiches 10 der Ausgleichswendel 2 aneinander anliegen. Während des beschriebenen Vorganges wird der Gewindeabschnitt 14 der Schraube 4 in eine fluchtend angeordnete Gewindebohrung 24 des Bauteils B eingeschraubt. Durch Anziehen der Schraube 4 wird eine feste Verschraubung der Bauteile A und B erreicht. Aufgrund des selbsttätigen Toleranzausgleiches wird hierbei der Fügespalt SP eingehalten, ohne dass das Bauteil A oder B verspannt und/oder verformt wird.

Die axiale Länge des auf Abstand gewickelten Steigungsbereiches 10 wird relativ zum Durchmesser des Schraubennenndurchmessers groß gewählt, z. B. so, dass sie in der Größenordnung der axialen Länge des Steigungsbereiches 8 oder darüber liegt. Es ergibt sich dann eine relativ zum Schraubennenndurchmesser große Klemmmlänge (Maße H + SP), was zu einer großen absoluten Dehnung der Schraube 4 führt. Dies ist von besonderem Vorteil hinsichtlich der Sicherheit gegen Lösen der Schraubverbindung bei Schwingungsbelastung.

In den Figuren 5 und 6 ist auf der linken Seite eine herkömmliche Schraubverbindung 26 angedeutet, durch die im dargestellten Ausführungsbeispiel das Bauteil A am Bauteil B vormontiert ist. Falls diese Schraubverbindung 26 toleranzbehaftet ist, werden die Bauteile A und B durch Einsatz des erfindungsgemäßen Gegenstandes in die gewünschte bauliche Zuordnung mit gleichzeitigem Toleranzausgleich gebracht.

## Patentansprüche

1. Vorrichtung zum Verschrauben eines ersten Bauteils (A) und eines zweiten Bauteils (B) unter Freilassung eines Fügespaltes (SP) mittels einer Schraube (4) und einer Ausgleichswendel (2) zum Ausgleichen von Toleranzen des Fügespaltes (SP), damit die Schraube (4) zum Verschrauben der beiden Bauteile in eine Gewindebohrung (24) des zweiten Bauteils (B) einschraubbar ist, **dadurch gekennzeichnet, dass**
bei der Vorrichtung die Ausgleichswendel (2) auf der Schraube (4) durch Reibschluss und/oder lösbaren Formschluss festlegbar und in ihren Abmessungen auf einen wendelförmigen Durchzugsabschnitt (6) des ersten Bauteils (A) abgestimmt ist, so dass die Ausgleichswendel durch Antreiben der Schraube (4) durch den Durchzugsabschnitt (6) hindurch drehbar ist, bis sie den Fügespalt (SP) zwecks Toleranzausgleich ausfüllt, und der Reibschluss und/oder lösbare Formschluss durch weiteres Antreiben der Schraube (4) überwunden wird.

2. Vorrichtung nach Anspruch 1, **dadurch gekennzeichnet, dass** die Ausgleichswendel (2) einen auf Block gewickelten Steigungsbereich (8) zum Ausfüllen des Fügespaltes (SP) hat.

3. Vorrichtung nach Anspruch 2, **dadurch gekennzeichnet, dass** die axiale Länge des auf Block gewickelten Steigungsbereiches (8) der Ausgleichswendel (2) größer als die maximale Tiefe des Fügespaltes (SP) ist.

4. Vorrichtung nach Anspruch 2 oder 3, **dadurch gekennzeichnet, dass** der auf Block gewickelte Steigungsbereich (8) der Wendel (2) ein etwas abgehobenes Ende (12) hat, um ein Einfädeln der Ausgleichswendel (2) in den wendelförmigen Durchzugsabschnitt (6) des ersten Bauteils (A) zu gewährleisten.

5. Vorrichtung nach einem der vorhergehenden Ansprüche, **dadurch gekennzeichnet, dass** die Ausgleichswendel (2) einen auf Abstand gewickelten Steigungsbereich (10) hat, der beim Einschrauben der Schraube (4) in die Gewindebohrung (24) des zweiten Bauteils (B) komprimiert wird.

6. Vorrichtung nach Anspruch 5, **dadurch gekennzeichnet, dass** die axiale Länge des auf Abstand gewickelten Steigungsbereiches (10) der Ausgleichswendel (2) relativ zum Durchmesser der Schraube (4) groß ist, um eine große Länge und somit große Dehnung der Schraube (4) zu ermöglichen.

7. Vorrichtung nach einem der vorhergehenden Ansprüche, **dadurch gekennzeichnet, dass** die Ausgleichswendel (2) einen abgeflachten Querschnitt zwecks flächiger gegenseitiger Anlage ihrer Windungen hat.

8. Vorrichtung nach einem der vorhergehenden Ansprüche, **dadurch gekennzeichnet, dass** der Querschnitt der Ausgleichswendel (2) eine Kontur (11) hat, die ein seitliches Verrutschen der Windungen der Ausgleichswendel (2) im verspannten Zustand verhindern.

9. Vorrichtung nach einem der vorhergehenden Ansprüche, **dadurch gekennzeichnet, dass** die Schraube (4) einen gewindefreien Mitnahmeabschnitt (16) hat, der durch Reibschluss und/oder lösbaren Formschluss mit der Ausgleichswendel verbindbar ist.

10. Vorrichtung nach einem der vorhergehenden Ansprüche, **dadurch gekennzeichnet, dass** die Schraube (4) einen Gewindeabschnitt (14) hat, dessen Außendurchmesser (Ds) kleiner als der Innendurchmesser (Di) der Ausgleichswendel (2) ist.

11. Vorrichtung nach einem der vorhergehenden Ansprüche, **dadurch gekennzeichnet, dass** der Durchzugsabschnitt (6) des ersten Bauteils (A) sich über maximal eine einzige Windung erstreckt.

12. Vorrichtung nach einem der vorhergehenden Ansprüche, **dadurch gekennzeichnet, dass** die Steigung des Durchzugsabschnittes (6) im Wesentlichen gleich der Steigung der Ausgleichswendel (2) ist.

13. Vorrichtung nach einem der Ansprüche 1 bis 12, **dadurch gekennzeichnet, dass** der Durchzugsabschnitt (6) unmittelbar in das erste Bauteil (A) eingearbeitet ist.

14. Vorrichtung nach einem der Ansprüche 1 bis 12, **dadurch gekennzeichnet, dass** der Durchzugsabschnitt in ein vom ersten Bauteil getrenntes, mit diesem fest verbundenes Teil eingearbeitet ist.

15. Ausgleichswendel für eine Vorrichtung nach einem der vorgehenden Ansprüche, **dadurch gekennzeichnet, dass** sie einen auf Block gewickelten Steigungsbereich (8) und einen auf Abstand gewickelten Steigungsbereich (10) hat.

16. Schraube für eine Vorrichtung nach einem der vorhergehenden Ansprüche, **dadurch gekennzeichnet, dass** sie einen Gewindeabschnitt (14) und einen gewindefreien Mitnahmeabschnitt (16) hat, dessen Durchmesser (Da) größer als der Außendurchmesser (Ds) des Gewindeabschnittes (14) ist.

17. Bauteil für eine Vorrichtung nach einem der vorhergehenden Ansprüche, **dadurch gekennzeichnet, dass** es einen wendelförmigen Durchzugsabschnitt (6) hat.

## Claims

1. A device for bolting a first component (A) and a second component (B) while leaving a joining gap (SP) by means of a bolt (4) and a compensating coil (2) for compensating tolerances of the joining gap (SP) so that the bolt (4) is screwable into a threaded hole (24) of the second component (B) for bolting the two components; the device is **characterized in that**:
the compensating coil (2) is fixable to the bolt by frictional engagement means and/or releasable positive engagement means and its dimensions are adapted to a helical rim hole portion (6) of the first component (A) so that upon actuation of the bolt, the compensating coil is rotatable through the helical rim hole portion (6) until it fills the joining gap (SP) for the purpose of tolerance compensation and the frictional engagement means and/or releasable positive engagement means are overcome by further actuation of the bolt (4).

2. A device according to claim 1, **characterized in that** the compensating coil (2) comprises a stacked-wound pitch portion (8) for filling the joining gap (SP).

3. A device according to claim 2, **characterized in that** the axial length of the stacked-wound pitch portion (8) of the compensating coil (2) is larger than the maximum depth of the joining gap (SP).

4. A device according to claim 2 or 3, **characterized in that** the stacked-wound pitch portion (8) of the coil (2) has a somewhat raised end in order to ensure a threading of the compensating coil (2) into the helical rim hole portion (6) of the first component (A).

5. A device according to any of the preceding claims, **characterized in that** the compensating coil (2) has an interspaced-wound pitch portion (10) which is compressed when the bolt (4) is screwed into the threaded hole (24) of the second component (B).

6. A device according to claim 5, **characterized in that** the axial length of the interspaced-wound pitch portion (10) of the compensating coil (2) is large relative to the diameter of the bolt (4) in order to allow a large length and thus large expansion of the bolt (4).

7. A device according any of the preceding claims, **characterized in that** the compensating coil (2) has a flattened cross-section for the purpose of plane mutual abutting of its coils.

8. A device according to any of the preceding claims, **characterized in that** the cross-section of the compensating coil (2) has a contour (11) which prevents lateral slippage of the coils of the compensating coil (2) in the tightened state.

9. A device according to any of the preceding claims, **characterized in that** the bolt (4) has a non-threaded engaging portion (16) connectable to the compensating coil by frictional engagement means and/or releasable positive engagement means.

10. A device according to any of the preceding claims, **characterized in that** the bolt (4) has a threaded portion (14) whose outer diameter (Ds) is smaller than the inner diameter (Di) of the compensating coil (2).

11. A device according to any of the preceding claims, **characterized in that** the rim hole portion (6) of the first component (A) extends over a maximum of one single coil.

12. A device according to any of the preceding claims, **characterized in that** the pitch of the rim hole portion (6) is essentially equal to the pitch of the compensating coil (2).

13. A device according to any of the claims 1 to 12, **characterized in that** the rim hole portion (6) is incorporated directly into the first component (A).

14. A device according to any of the claims 1 to 12, **characterized in that** the rim hole portion is incorporated into a member, that is separate from and solidly connected to the first component.

15. A compensating coil for a device according to any of the preceding claims, the compensating coil **characterized in that** it has a stacked-wound pitch portion (8) and an interspaced-wound pitch portion (10).

16. A bolt for a device according to any of the preceding claims, the bolt **characterized in that** it has a threaded portion (14) and a non-threaded engaging portion (16) whose diameter (Da) is larger than the outer diameter (Ds) of the threaded portion (14).

17. A component for a device according to any of the preceding claims, the component **characterized in that** it has a helical rim hole portion (6).

## Revendications

1. Liaison par vissage d'un premier élément (A) et d'un second élément (B) en laissant libre une fente d'assemblage (SP) au moyen d'une vis (4) et d'un filament spiralé de compensation (2) pour compenser des tolérances de la fente d'assemblage (SP), afin que la vis (4) puisse être vissée dans un alésage fileté (24) du second élément (B) pour le vissage des deux éléments, **caractérisée en ce que**
dans la liaison, le filament spiralé de compensation (2) peut être fixé sur la vis (4) par frottement et/ou par retenue mécanique démontable et est adapté en ce qui concerne ses dimensions à une portion de passage (6) en forme de spirale du premier élément (A) de sorte que le filament spiralé de compensation peut être tourné à travers la portion de passage (6) par l'entraînement de la vis (4) jusqu'à ce qu'il remplisse la fente d'assemblage (SP) à des fins de compensation de tolérance, et le frottement et/ou la retenue mécanique démontable est surmonté(e) par entraînement supplémentaire de la vis (4).

2. Liaison selon la revendication 1, **caractérisée en ce que** le filament spiralé de compensation (2) présente une zone de pas (8) enroulée en bloc pour remplir la fente d'assemblage (SP).

3. Liaison selon la revendication 2, **caractérisée en ce que** la longueur axiale de la zone de pas (8) enroulée en bloc du filament spiralé de compensation (2) est supérieure à la profondeur maximale de la fente d'assemblage (SP).

4. Liaison selon la revendication 2 ou 3, **caractérisée en ce que** la zone de pas (8) enroulée en bloc du filament spiralé (2) présente une extrémité (12) qui s'écarte légèrement pour assurer un enfilage du filament spiralé de compensation (2) dans la portion de passage (6) en forme de spirale du premier élément (A).

5. Liaison selon l'une des revendications précédentes, **caractérisée en ce que** le filament spiralé de compensation (2) présente une zone de pas (10) enroulée avec espacement qui est comprimée lors du vissage de la vis (4) dans l'alésage fileté (24) du second élément (B).

6. Liaison selon la revendication 5, **caractérisée en ce que** la longueur axiale de la zone de pas (10) enroulée avec espacement du filament spiralé de compensation (2) est grande par rapport au diamètre de la vis (4) pour permettre une grande longueur et ainsi une grande extension de la vis (4).

7. Liaison selon l'une des revendications précédentes, **caractérisée en ce que** le filament spiralé de compensation (2) présente une coupe transversale aplatie pour un appui mutuel plan de ses spires.

8. Liaison selon l'une des revendications précédentes, **caractérisée en ce que** la coupe transversale du filament spiralé de compensation (2) présente un contour (11) qui empêche un glissement latéral des spires du filament spiralé de compensation (2) à l'état tendu.

9. Liaison selon l'une des revendications précédentes, **caractérisée en ce que** la vis (4) présente une portion d'entraînement (16) non filetée qui peut être assemblée avec le filament spiralé de compensation par frottement et/ou par retenue mécanique démontable.

10. Liaison selon l'une des revendications précédentes, **caractérisée en ce que** la vis (4) présente une portion filetée (14) dont le diamètre extérieur (Ds) est inférieur au diamètre intérieur (Di) du filament spiralé de compensation (2).

11. Liaison selon l'une des revendications précédentes, **caractérisée en ce que** la portion de passage (6) du premier élément (A) s'étend sur maximum une seule spire.

12. Liaison selon l'une des revendications précédentes, **caractérisée en ce que** le pas de la portion de passage (6) est essentiellement égal au pas du filament spiralé de compensation (2).

13. Liaison selon l'une des revendications 1 à 12, **caractérisée en ce que** la portion de passage (6) est incorporée directement dans le premier élément (A).

14. Liaison selon l'une des revendications 1 à 12, **caractérisée en ce que** la portion de passage est incorporée dans une pièce indépendante du premier élément et assemblée fixement avec celui-ci.

15. Filament spiralé de compensation pour une liaison selon l'une des revendications précédentes, **caractérisé en ce qu'**il présente une zone de pas (8) enroulée en bloc et une zone de pas (10) enroulée avec espacement.

16. Vis pour une liaison selon l'une des revendications précédentes, **caractérisée en ce qu'**elle présente une portion filetée (14) et une portion d'entraînement (16) non filetée dont le diamètre (Da) est supérieur au diamètre extérieur (Ds) de la portion filetée (14).

17. Elément pour une liaison selon l'une des revendications précédentes, **caractérisé en ce qu'**il présente une portion de passage (6) en forme de spirale.
